# EUROPEAN PATENT SPECIFICATION

(11) **EP 1 094 393 B1**
(45) Date of publication and mention of the grant of the patent: **12.04.2006**
(21) Application number: 00122233.0
(22) Date of filing: 17.10.2000
(51) Int. Cl.: G06F 12/14, G06F 1/00

(54) **Procedure for the prevention of unauthorized access to a memory**
Verfahren zur Verhinderung eines auf einem Speicher unberechtigten Zugriffs
Procédé pour éviter l'accès non-autorisé à une mémoire

(30) Priority: 18.10.1999 DE 19950118
(43) Date of publication of application: 25.04.2001
(73) Proprietor: TEXAS INSTRUMENTS DEUTSCHLAND GMBH, 85356 Freising (DE)
(72) Inventor: Schauer, Stefan, 85465 Langenpreising (DE)
(74) Representative: Degwert, Hartmut

(56) References cited:
- US-A- 5 704 039

## Description

The invention relates to a procedure for the prevention of unauthorised access to the memory of an integrated circuit which is programmable to execute a desired function and contains at least one input/output interface, one processor and the memory.

To an ever increasing extent integrated circuits are used in many different applications which can be programmed to execute desired functions. The integrated circuits concerned comprise a memory which can be fed with a program code which depends on the desired function and which constitutes the basis for the mode of operation of the processor which is also contained in the integrated circuit. The program code usually is a specific development of the manufacturers and therefore their intellectual property, which is to be protected against outside access: Protection against access by outsiders to the memory in which the program code is filed has been achieved up to now in that a fuse link is provided at an appropriate location within the integrated circuit which is interrupted after the program code has been written into the memory, making it from then on impossible to access the memory from the outside in order to, for example, read or modify the program code. In this case, even the user is prevented from using this option. It is only the processor that has then internal access to the memory, to allow it to function in accordance with the program stored.

A method which enables authorized access to a data processing system is disclosed in US-A-5 704 039. A security mode which prevents external access is unlocked by providing a code stored in a plurality of mask registers such that the system is selectively allowed to communicate with an external device. When a reset signal is received, a selector selects a first mask register and retrieves a first stored address value and a first stored data value therefrom. The first stored address and data values are respectively compared with a first address value and a first data value by a comparator. This process of selecting and comparing continues until a final match signal is asserted. When the final match signal is asserted, a secure signal is negated and the system may communicate with the external user.

The invention rests on the requirement to develop a procedure of the above-indicated type in such a way that it will be possible to change the program code stored in the memory at a later date, whilst protection against unauthorised access is still maintained.

In accordance with the invention, this requirement is met by the features of claim 1.

When making use of the procedure according to the invention, external access will only be possible if, together with the access request, a program code section is input which has been stored at the pre-determined address in the memory as part of the previous programming process. Only if the two program code sections coincide, can the memory be accessed again in.order to input a new program code. Since only the person who realised the previous programming has knowledge of the program code section, which is required to enable access, the memory is safe from unauthorised access.

It is of advantage that the section containing the interrupt vectors is to be used as a program-specific program code section. It is also possible to use for this program code section that section which contains the definition of the constants or variables used in the program.

The invention shall now be explained by way of examples and with reference to the illustration, where
Fig. 1 represents a schematic diagram of an integrated circuit wherein the procedure according to the invention may be used; and
Fig. 2 is a schematic representation of a program code group with a program-specific section for use within the procedure according to the invention.

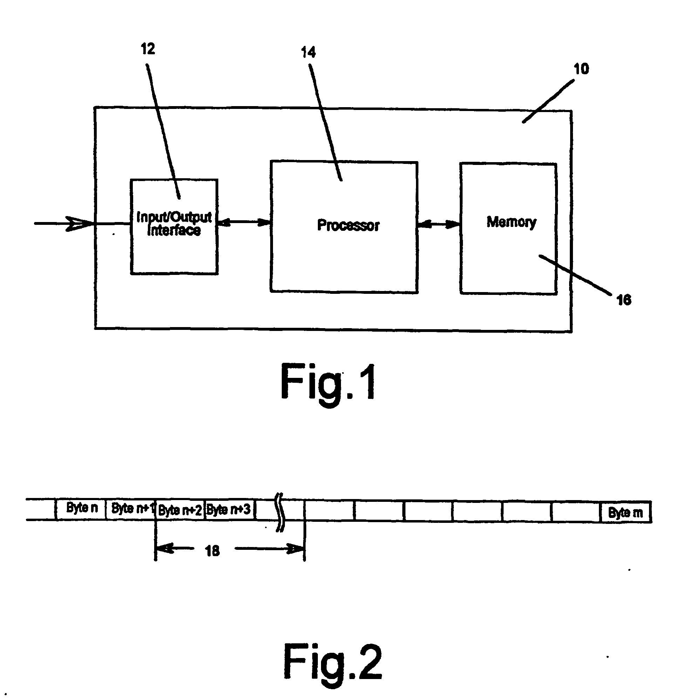

Figure 1 represents an integrated circuit 10 comprising an input/output interface 12, a processor 14 and a memory 16. The integrated circuit 10 may, of course, also contain additional assemblies, which are of no relevance, however, for the comprehension of the procedure here to be described.

In order to make the integrated circuit 10 function in the manner desired by the user, a program code must be input into the memory 16, which defines the desired processing mode of the processor 14. For the purpose of inputting this program code, the processor 14 contains a so-called bootstrap program, the object of which is to control any access to the memory 16 and to direct a program code which is input via the input/output interface 12 to the desired address.

The program code, according to figure 2, consists of successive bytes which are input, one after another, into the memory 16 under the control of the bootstrap program. The program code contains a section 18 which is filed by the bootstrap program at a specific address within the memory 16. This section 18 constitutes a part of the program code; its contents depends on the program code in use.

Once the program code has been stored in memory 16, the integrated circuit 10 will be in a position to execute the function required by the user.

Should it become necessary to re-program the integrated circuit 10, to make it execute a different function, the program code stored in the memory 16 must be changed. To this end it will be necessary to access the memory 16. In order to execute such a re-programming process, the bootstrap program is once more activated, so that it can control the storage of the new program code in the memory 16. The bootstrap program will, however, only enable access to the memory 16 if, via the input/output interface, the program code section 18, which has been filed in the course of the previous programming process at the pre-determined address in the memory 16, is fed into it. However, since this section of the program code is known only to the person who has done the previous programming, it becomes impossible for unauthorised persons to gain access to the memory 16 to, for example, read or even change the program code stored in it.

The section containing the interrupt vectors should preferably be used as the program code section 18. This section specifically depends on the program code in each case and is therefore different from program to program. It is, on the other hand, also easily possible to use that section of the program code in which are defined the constants or variables which are used in the program.

By means of the procedure described, a program code stored in the memory of an integrated circuit can therefore be safely and securely protected against unauthorised access. For this it is not necessary to provide a specific access password, which would have to be stored at a specific location within the memory.

## Claims

1. Procedure for the prevention of unauthorized access to the memory (16) of an integrated circuit (10) which is programmable to execute a desired function and containing at least one input/output interface (12), one processor (14) and the memory (16), **characterized in that** whilst programming the integrated circuit (10), whereby a program code is input into the memory (16) via its input/output interface (12), a program code section (18) specific to the program code is stored in the memory (16) at a pre-determined address under the control of the processor (14), and that at any further attempt to access the memory (16), external access will only be enabled if, together with the access request, at least one program code section is input into the processor (14), which coincides with the program code section (18) stored at the pre-determined address in the memory (16) as part of the previous programming process in order to input a new program code.

2. Procedure according to claim 1, whereby the section containing the interrupt vectors is used as the program-specific program code section (18).

3. Procedure according to claim 1, whereby the section containing the definition of the constants and variables used in the program is used as the program-specific program code section (18).

## Patentansprüche

1. Verfahren zum Verhindern eines unbefugten Zugriffs auf den Speicher (16) einer zur Durchführung einer gewünschten Funktion programmierbaren integrierten Schaltung (10), die mindestens eine Eingabe/Ausgabe-Schnittstelle (12), einen Prozessor (14) und den Speicher (16) enthält, **dadurch gekennzeichnet, dass** bei der Programmierung der integrierten Schaltung (10), bei der über ihre Eingabe/Ausgabe-Schnittstelle (12) ein Programmcode in den Speicher (16) eingegeben wird, ein für den Programmcode spezifischer Programmcodeabschnitt (18) unter der Steuerung durch den Prozessor (14) an einer vorbestimmten Adresse im Speicher (16) abgelegt wird und dass bei jedem weiteren versuchten Zugriff auf den Speicher (16) zur Eingabe eines neuen Programmcodes der Zugriff von außen nur freigegeben wird, wenn zusammen mit der Zugriffsanforderung mindestens ein Programmcodeabschnitt in den Prozessor (14) eingegeben wird, der mit dem im Zuge des vorherigen Programmierungsvorgangs an der vorbestimmten Adresse im Speicher (16) abgelegten Programmcodeabschnitt (18) übereinstimmt.

2. Verfahren nach Anspruch 1, bei dem als programmspezifischer Programmcodeabschnitt (18) der Abschnitt verwendet wird, der die Interruptvektoren enthält.

3. Verfahren nach Anspruch 1, bei dem als programmspezifischer Programmcodeabschnitt (18) der Abschnitt verwendet wird, der die Definition der im Programm verwendeten Konstanten bzw. Variablen enthält.

## Revendications

1. Procédure pour empêcher un accès non autorisé à la mémoire (16) d'un circuit intégré (10), qui est programmable pour exécuter une fonction désirée et contenant au moins une interface d'entrée / sortie (12), un processeur (14) et la mémoire (16), **caractérisée en ce que** alors que s'effectue la programmation du circuit intégré (10), par quoi un code de programme est introduit dans la mémoire (16) par l'intermédiaire d'une interface d'entrée / sortie (12), une section de code de programme (18) spécifique au code de programme est mémorisé dans la mémoire (16) à une adresse prédéterminée, sous la commande du processeur (14), et que lors de toute autre tentative visant à accéder à la mémoire (16), un accès externe est autorisé uniquement si, conjointement avec la demande d'accès, au moins une section de code de programme est introduite dans le processeur (14), section de code de programme qui coïncide avec la section de code de programme (18) mémorisée à l'adresse prédéterminée dans la mémoire (16) en tant que partie du processus antérieur de programmation pour introduire un nouveau code de programme.

2. Procédure selon la revendication 1, dans laquelle la section contenant les vecteurs d'interruption est utilisée en tant que section de code de programme (18) spécifique au programme.

3. Procédure selon la revendication 1, dans laquelle la section contenant la définition des constantes et des variables utilisées dans le programme est utilisée en tant que section de code de programme (18) spécifique au programme.
